# EUROPEAN PATENT APPLICATION

(11) **EP 4 269 352 A1**
(43) Date of publication of application: **01.11.2023**
(21) Application number: 21911017.8
(22) Date of filing: 23.12.2021
(51) Int. Cl.: C01G 25/00, C01G 31/00, C01G 45/00, C01G 53/00, H01B 1/06, H01B 1/08, H01M 10/052, H01M 10/0562

(54) **LITHIUM ION-CONDUCTIVE OXIDE MATERIAL AND ALL-SOLID-STATE LITHIUM SECONDARY BATTERY**

(30) Priority: 24.12.2020 JP 2020214515
(71) Applicant: Nippon Denko Co.,Ltd., Tokyo 103-8282 (JP)
(72) Inventor: HIRABARU, Hikaru, Tokyo 103-8282 (JP); TOMITA, Hiroki, Tokyo 103-8282 (JP)
(74) Representative: Vossius & Partner Patentanwälte Rechtsanwälte mbB
(86) International application number: PCT/JP2021/048051
(87) International publication number: WO 2022/138878

(57) **Abstract**

In a garnet-type or garnet-like LLZ-based lithium ion-conductive oxide material, a high ion conductivity is realized. Specifically, the lithium ion-conductive oxide material contains each element of Li, La, Zr and O and at least an A element, the A element has a d electron, and is in a cation state where regular octahedral coordination preference in stabilization of an anion of oxygen by a ligand field becomes 50 kJ/mol or more, and a mole ratio A/La of the A element to La is 0.01 or more and 0.45 or less.

## Description

### Technical Field

The present invention relates to a lithium ion-conductive oxide material and an all-solid-state lithium secondary battery.

### Background Art

Recently, in association with the distribution of electronic devices such as personal computers and smartphones, the development of natural energy storage techniques, and the distribution of electrical vehicles and the like, the use of lithium ion secondary batteries as power supplies thereof is rapidly spreading. In conventional lithium ion secondary batteries, since electrolytes containing a flammable organic solvent are in wide use, there is a risk of ignition, explosion or the like. Therefore, development of all-solid-state batteries in which a solid electrolyte is used in place of an organic solvent and other battery elements are all composed of solid is in progress to ensure high safety.

All-solid-state batteries have no concern of leakage or ignition and are safe since electrolytes are ceramics. In particular, regarding all-solid-state lithium ion secondary batteries in which metallic lithium is used for the electrode, an increase in energy density is expected, but there is a need to use an electrolyte composed of a specific material stable with respect to metallic lithium due to the high reactivity of metallic lithium.

As such solid electrolytes, oxide materials having a garnet-type crystal structure are attracting attention. Oxides of a typical metallic element (positive element) form ionic crystals (Dictionary of Chemistry 3, 16th printing of reduced-size edition issued on March 10, 1974). In Non Patent Literature 1, the stability of Li₇La₃Zr₂O₁₂ (hereinafter, referred to as LLZ) with respect to metallic Li is reported, and the use as a solid electrolyte in all-solid-state lithium secondary batteries is expected. As crystal structures, LLZ mainly has a cubic crystal structure or a tetragonal crystal structure. It is known that, when a specific element configuring LLZ is substituted with a different element, cubic LLZ stabilizes and has a high ion conductivity.

Patent Literature 1 discloses that LLZ has a low pellet density and the Li ion conductivity is immeasurable; however, when Al is contained in LLZ, LLZ can be stabilized and acquired as pellets, and, furthermore, a favorable Li ion conductivity is exhibited.

Patent Literature 2 discloses that, when Al and Mg are added to LLZ in a combined manner, a high-density and high-strength LLZ-based solid electrolyte ceramics material can be obtained by suppressing or avoiding a defect such as uneven firing, cracks or vacancies and the occurrence of abnormal grain growth or the like.

Patent Literature 3 discloses that, when, in LLZ, La sites are substituted with an element such as Sr or Ca and also Zr sites are substituted with an element such as Nb, it is possible to suppress a decrease in the Li ion conductivity as much as possible and to further reduce the firing energy.

Patent Literature 4 discloses that, when Al and one or more oxides selected from NiO, CuO, CoO_{4/3} and FeO_{3/2} are added to LLZ, the sintered density improves.

Patent Literature 5 discloses that, when at least one of Mg and A (A is at least one element selected from the group consisting of Ca, Sr and Ba) is contained in LLZ, a lithium ion-conductive ceramics material having a desired ion conductivity is provided while the cost is suppressed.

Patent Literature 6 discloses that, when Mg is contained in LLZ, and the distance between a Mg atom and an O atom in each lattice of a garnet-type crystal structure is appropriately set, it is possible to stabilize the garnet-type or garnet-like crystal structure and to improve the lithium ion conductivity.

In Non Patent Literature 2, regarding the crystal structure of cubic LLZ, it is reported that element Li occupies Li1 and Li2 sites, which are two kinds of crystallographic sites, and the sites are positioned at tetrahedral 24d sites and octahedral 96h sites, respectively. In addition, it is reported that the conduction path of Li ions in LLZ migrates along the Li2→Li1→Li2 sites through the Li1 site, and a three-dimensional network of the Li ion migration path is formed in the LLZ structure in the structure.

In Non Patent Literature 3, it is reported that, when LLZ is substituted with Ga, Ga substitutes some of the Li1 positions of element Li, and Li vacancies are introduced due to a difference in charge between Li⁺ and Ga³⁺, whereby cubic LLZ having a high ion conductivity can be formed.

### Citation List

### Patent Literature

Patent Literature 1: Japanese Patent Laid-Open No. 2011-051800
Patent Literature 2: International Publication No. WO 2013/128759
Patent Literature 3: Japanese Patent Laid-Open No. 2013-32259
Patent Literature 4: Japanese Patent Laid-Open No. 2016-169142
Patent Literature 5: Japanese Patent Laid-Open No. 2016-40767
Patent Literature 6: Japanese Patent Laid-Open No. 2018-106799
Non Patent Literature 1: R. Murugan et al., Angew. Chem., 2007. 46. 7778 to 7781
Non Patent Literature 2: J. Awaka et al., Chem. Lett., 2011. 40. 60 to 62
Non Patent Literature 3: C. Bernuy-Lopez et al., Chem. Mater., 2014. 26. 3610 to 3617

### Summary of Invention

### Technical Problem

As described above, when LLZ is substituted with an element, Li vacancies are introduced, and cubic crystals are stabilized to exhibit a high lithium ion conductivity; however, as described in Non Patent Literature 3, the substituting element is positioned in the Li1 positions, which impairs the free migration of Li along the Li2→Li1→Li2 sites and creates a possibility of a decrease in the conductivity.

Therefore, an objective of the present invention is to provide, in consideration of the above-described circumstances, a lithium ion-conductive oxide material that is a complex oxide having a garnet-type or garnet-like crystal structure, has a high ion conductivity and has more stable characteristics.

### Solution to Problem

The present inventors have conducted studies to solve the above-described problems, and have found that a complex oxide having a garnet-type or garnet-like crystal structure, containing at least an A element, in which the A element has a d electron and is in a cation state where regular octahedral coordination preference in stabilization of an anion of oxygen by a ligand field becomes 50 kJ/mol or more, allows Li2 sites, which are octahedral sites, to be selectively substituted with the A element, and allows stabilization of the crystal structure by coordination-stabilized substitution, and thus it is possible to optimize Li charge carriers and the Li vacancy concentration without impairing the free migration of Li ions; accordingly, stable characteristics at a high ion conductivity can be obtained, leading to completion of the present invention.

The gist of the present invention is as described below.
(1) A lithium ion-conductive oxide material containing each element of Li, La, Zr and O and at least an A element, wherein the A element has a d electron, and is in a cation state where regular octahedral coordination preference in stabilization of an anion of oxygen by a ligand field becomes 50 kJ/mol or more, and a mole ratio A/La of the A element to La is 0.01 or more and 0.45 or less.
(2) The lithium ion-conductive oxide material according to (1), wherein the lithium ion-conductive oxide material is composed of a complex oxide having a garnet-type or garnet-like crystal structure, and a proportion of Li site vacancies is 52.5% or more and 72.5% or less.
(3) The lithium ion-conductive oxide material according to (1) or (2), wherein the lithium ion-conductive oxide material is composed of a complex oxide having a garnet-type or garnet-like crystal structure; in a case where a proportion of element Li sites substituted is more than 0% and 4.0% or less, a proportion of Li site vacancies is 52.5% or more and 55.5% or less; and, in a case where the proportion of the element Li substituted is 15% or more and 21% or less, the proportion of the Li site vacancies is 60.0% or more and 70.0% or less.
(4) The lithium ion-conductive oxide material according to any one of (1) to (3), further containing a B element, wherein B is one or two selected from Mg and Sr.
(5) The lithium ion-conductive oxide material according to any one of (1) to (4), wherein the A element is in a cation state where the regular octahedral coordination preference in stabilization of an anion of oxygen by a ligand field becomes 60 kJ/mol or more.
(6) The lithium ion-conductive oxide material according to any one of (1) to (5), wherein the A element is contained in a divalent cation state.
(7) The lithium ion-conductive oxide material according to any one of (1) to (6), having an ion conductivity at room temperature of 1 × 10⁻⁵ S/cm or more.
(8) The lithium ion-conductive oxide material according to any one of (1) to (7), wherein the crystal structure has a lattice constant of 12.93 Å or more.
(9) The lithium ion-conductive oxide material according to any one of (1) to (8), having a median size of 0.3 µm or more and 35 µm or less.
(10) A lithium ion secondary battery containing the lithium ion-conductive oxide material according to any one of (1) to (9).
(11) The lithium ion secondary battery according to (10), wherein a De/Dc ratio of an average particle diameter De of the lithium ion-conductive oxide material to an average particle diameter Dc of a positive electrode material of the lithium ion secondary battery is 0.1 or more and 10.0 or less.
(12) An all-solid-state lithium secondary battery, including the lithium ion-conductive oxide material according to any one of (1) to (9) as a solid electrolyte.
(13) The all-solid-state lithium secondary battery according to (12), wherein a De/Dc ratio of an average particle diameter De of the lithium ion-conductive oxide material to an average particle diameter Dc of a positive electrode material of the all-solid-state lithium secondary battery is 0.1 or more and 10.0 or less.

### Advantageous Effects of Invention

According to the present invention, since a favorable ion conductivity makes it difficult for substituting metal ions to migrate by coordination-stabilized substitution and thus stable characteristics are exhibited, that is, the crystal structure becomes stable, it is possible to provide a lithium ion-conductive oxide material capable of maintaining a high conductivity. That is, the crystal structure exhibits stable characteristics, whereby it is possible to prevent phase displacement into other crystal structures or the appearance of other phases, and, since Li ions migrate in the structure of LLZ, it is possible for the lithium ion-conductive oxide material to have a high conductivity by holding the structure of LLZ.

In addition, it is possible to provide an all-solid-state lithium ion secondary battery having excellent battery characteristics using the lithium ion-conductive oxide material of the present invention as a solid electrolyte.

### Brief Description of Drawing

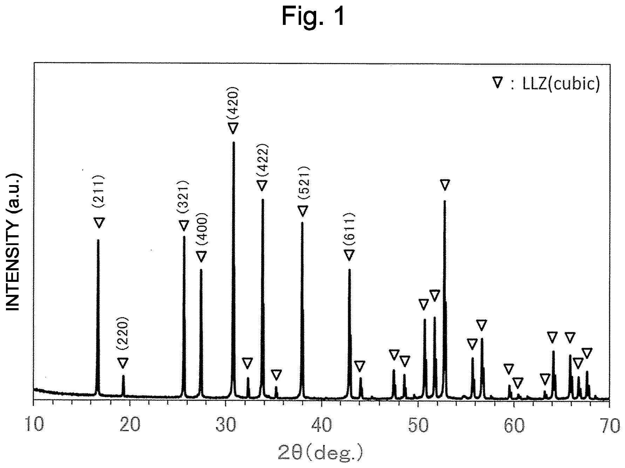

[Figure 1] Figure 1 shows an example of an X-ray diffraction pattern obtained by X-ray diffraction measurement performed on a synthetic powder of Example 47, which is an example of the present invention. From this result, it is confirmed that the example of the present invention has a garnet-type crystal structure or a garnet-like crystal structure.

### Description of Embodiment

A lithium ion-conductive oxide material of the present invention contains each element of Li, La, Zr and O and at least an A element, the A element has a d electron, and is in a cation state where regular octahedral coordination preference in stabilization of an anion of oxygen by a ligand field becomes 50 kJ/mol or more, and a mole ratio A/La of the A element to La is 0.01 or more and 0.45 or less.

The lithium ion-conductive oxide material in the present invention is composed of a complex oxide having a garnet-type or garnet-like crystal structure, Li ions in the crystal structure occupy Li1 and Li2 sites, which are two kinds of crystallographic sites, and the sites are positioned at tetrahedral and octahedral sites, respectively. The conduction path of the Li ions in LLZ migrates along the Li2→Li1→Li2 sites through the Li1 site, and a three-dimensional network of the Li ion migration path is formed in the LLZ structure in the structure.

Therefore, the containing of the A element in a cation state where regular octahedral coordination preference becomes 50 kJ/mol or more makes it possible to selectively and stably substitute the Li2 sites, which are octahedral sites, with the A element.

Therefore, it is possible for the lithium ion-conductive oxide material to have a high ion conductivity by optimizing Li charge carriers and the Li vacancy concentration without impairing the free migration of the Li ions along the Li2→Li1→Li2 sites. Compared to conventional substitution methods, it is possible to increase the Li vacancy concentration while ensuring the path for the Li ions (it is possible to promote the hopping conduction of the Li ions). Therefore, an increase in the substitution amount with the A element increases the ion conductivity; however, when the substitution amount is made to be too large, the Li content decreases, and the number of conduction carrier ions become too small, and thus an increase in the A element content more than a certain extent decreases the ion conductivity. Therefore, the Li site vacancy amount is preferably 52.5% or more and 72.5% or less, more preferably 53% or more and 69% or less and still more preferably 53% or more and 61% or less.

Here, as a specific A element, preferably, any one element selected from V, Mn, Ni and Cu can be an exemplary example.

In addition, in the present invention, as an additive element, the additive element A that substitutes some of element Li, which is an essential element, is used to control the substitution proportion of the additive element A that substitutes some of the element Li depending on the proportion of Li site vacancies. This is that the proportion of Li site vacancies in the chemical stoichiometric composition of Li₇La₃Zr₂O₁₂ is 53% and the substitution proportion of the additive element A that substitutes the element Li in the case of further increasing the number of Li site vacancies differs. Specifically, in a case where the proportion of the element Li substituted is more than 0% and 4.0% or less, the proportion of Li site vacancies is 52.5% or more and 55.5% or less, and, in a case where the proportion of the element Li substituted is 15% or more and 21% or less, the proportion of Li site vacancies is 60.0% or more and 70.0% or less, thereby achieving a preferable configuration of the solid electrolyte and exhibiting a large conductivity. The proportion of the element Li substituted with the additive element A mentioned herein is obtained by the Rietveld analysis of the measurement data of X-ray diffraction.

Here, a mole ratio A/La of the content of the A element to La is 0.01 or more and 0.45 or less. When the mole ratio A/La of the content of the A element to La is less than 0.01, it is not possible to stably obtain a sufficient conductivity for the above-described reason. On the other hand, when the mole ratio A/La of the content of the A element to La exceeds 0.45, as described above, the number of Li ions, which serve as conduction carriers, becomes too small or substituting ions obstruct the Li ion conduction path, which makes impossible to obtain a sufficient conductivity. The mole ratio A/La of the content of the A element to La is more preferably 0.01 or more and 0.35 or less and still more preferably 0.01 or more and 0.20 or less.

The A element is in a cation state where regular octahedral coordination preference becomes 50 kJ/mol or more, that is, an electron state (particularly, the number of d electrons) or valence that satisfies the above-described conditions. In a case where stabilization of an anion of oxygen O²⁻ by a crystal field (ligand field) is compared in regular tetrahedral coordination and regular octahedral coordination, when the stabilization energy is large in the regular octahedral coordination, the regular octahedral preference can be determined to be excellent, and there is a tendency that regular octahedral sites (positions) are occupied in oxide crystals even in actual cases.

In the present system, when the regular octahedral coordination preference (the difference in coordination stabilization energy between regular octahedral coordination and regular tetrahedral coordination) is 50 kJ/mol or more, the ion conductivity stably becomes large. This is because, as described above, there is regular octahedral coordination preference in the substitution, it is possible to effectively substitute the Li2 sites, which are octahedral sites, with the A element. Therefore, when the regular octahedral coordination preference is less than 50 kJ/mol, it becomes impossible to obtain a large ion conductivity. It is more preferable that the A element that is contained in the lithium ion-conductive oxide material be in a cation state where the regular octahedral coordination preference in stabilization of an anion of oxygen by a ligand field becomes 60 kJ/mol or more. In a case where the regular octahedral coordination preference of the A element is 60 kJ/mol or more, the tendency of the A element being fixed to the Li2 sites, which are octahedral sites, becomes stronger, and coordination stabilization makes it difficult for the metallic ions of the A element to migrate and stabilizes the crystal structure, and thus it is possible for the lithium ion-conductive oxide material to have a more stable higher ion conductivity without impairing the free migration of Li.

Regarding what has been described above, a similar fact can be said from coordination stabilization energy (crystal field stabilization energy, CFSE) and octahedral site preference energy (OSPE). When expressed with a crystal field splitting parameter (10 Dq), OSPE (Δ10 Dq) of 2 or more indicates regular octahedral coordination preference.

The lithium ion-conductive oxide material of the present invention is a complex oxide having a garnet-type or garnet-like crystal structure. The garnet-type crystal structure is a crystal group having Ia-3d as a space group, and the garnet-like crystal structure is a crystal group having I41/acd as a space group. A representative composition of a complex oxide containing each element of Li, La, Zr and O and having a garnet-type crystal structure is represented by Li₇La₃Zr₂O₁₂, and sites necessary to improve the ion conductivity are substituted.

X-ray diffraction measurement of, for example, synthetic powders shown in Examples 1 to 48 and Comparative Examples 1 to 9, which will be described below, is performed using an X-ray diffractometer (Rigaku smartlab), and X-ray diffraction patterns are obtained.

Then, in a case where the obtained X-ray diffraction pattern has an X-ray diffraction pattern similar to the X-ray diffraction pattern No. 4422259 (Li₇La₃Zr₂O₁₂, space group: Ia-3d (230)) of CSD (Cambridge Structural Database), the synthetic powder can be determined to have a garnet-type crystal structure or a garnet-like crystal structure. Since the lithium ion-conductive oxide material of the present invention has a different composition from No. 4422259 of CSD, there are cases where the diffraction angles and diffraction intensity ratios of diffraction peaks differ.

In the present invention, the A element that is contained in the lithium ion-conductive oxide material is more preferable contained so as to substitute some of the element Li. When the A element substitutes some of the element Li, the lithium ion-conductive oxide material becomes more stable, and the ion conductivity becomes higher.

Regarding whether or not the A element has substituted some of the element Li in the garnet-type or garnet-like crystal structure, the substitution of the element Li positions with the A element can be confirmed by, for example, performing X-ray diffraction measurement using synchrotron radiation and performing Rietveld analysis using RIETAN-FP based on the obtained X-ray diffraction patterns.

In addition, in the present invention, the A element that is contained in the lithium ion-conductive oxide material is more preferably contained in a divalent cation state. It is considered that vacancies are generated in the Li sites in the crystal structure due to the difference in charge between Li and the A element, it becomes easy for Li ions to move (the hopping conduction of Li ions becomes easy) and the ion conductivity improves.

Regarding whether or not the A element is contained in a divalent cation state, the valence and coordination number of the A element can be confirmed by, for example, measuring the amount of an X-ray absorbed at an energy near the absorption edge of the A element using XAFS (X-ray absorption fine structure).

In addition, when the lithium ion-conductive oxide material in the present invention further contains a B element (B is one or two selected from Mg and Sr), a higher ion conductivity can be obtained or an effect as described below can be obtained.

When added to the lithium ion-conductive oxide material, Mg has an effect of suppressing or avoiding a defect such as uneven firing, cracks or vacancies and the occurrence of abnormal grain growth or the like to improve the density and the strength; however, when the mole ratio Mg/La with respect to La significantly exceeds 0.2, there is a tendency that the lithium ion conductivity decreases, and the mole ratio is preferably 0.01 or more and 0.15 or less and more preferably 0.03 or more and 0.1 or less. In addition, Mg is more preferably blended (added) to substitute the Li sites.

When added to the lithium ion-conductive oxide material, Sr suppresses a decrease in the Li ion conductivity as much as possible and is capable of further reducing the firing energy (facilitating firing). When the mole ratio Sr/La with respect to La significantly exceeds 0.15, there is a tendency that the lithium ion conductivity decreases, and the mole ratio is preferably 0.01 or more and 0.13 or less and more preferably 0.03 or more and 0.1 or less. In addition, Sr is more preferably blended (added) to substitute La sites.

Since the mobility of lithium ions during the charging and discharging of lithium ion secondary batteries depends on the lithium ion conductivity of electrolytes, the lithium ion conductivity of the lithium ion-conductive oxide material of the present invention is preferably high. Specifically, the lithium ion conductivity is more preferably 1 × 10⁻⁵ S/cm or more at room temperature.

When the mobility of lithium ions becomes favorable, it is possible to use the lithium ion-conductive oxide material in the design of high-output batteries. On the other hand, when the conductivity is low, the solid electrolyte becomes a rate-determining factor, and the output becomes poor.

In the lithium ion-conductive oxide material, the lattice constant of the crystal structure is more preferably 12.93 Å (1.293 nm) or more. In garnet-type or garnet-like crystal structures, as the lattice constant becomes higher, there is a tendency that it is easier to realize a high lithium ion conductivity.

In a case where the lithium ion-conductive oxide material in the present invention is used in a lithium ion secondary battery or used as a solid electrolyte to produce an all-solid-state lithium secondary battery, the lithium ion-conductive oxide material needs to be in contact with a positive electrode material of an electrode, and, in order to prevent a decrease in the proportion of the positive electrode material contained in the electrode, the particles of the lithium ion-conductive oxide material are preferably fine. When the particles of the lithium ion-conductive oxide material are made to be fine, since the contact points with the positive electrode material increases, the mobility of lithium ions becomes favorable, and the effect of the present invention can be obtained more efficiently. Specifically, the De/Dc ratio of the average particle diameter De of the lithium ion-conductive oxide material to the average particle diameter Dc of the positive electrode material of a lithium ion battery or an all-solid-state lithium secondary battery is more preferably 0.1 or more and 10.0 or less. Therefore, the particle diameters are preferably as small as possible, but particle diameters of 100 nm or less are unrealistic in some cases since the manufacturing is difficult or the yield becomes poor.

Regarding whether or not the average particle diameter of an additive material of a lithium ion secondary battery electrode is a particle diameter satisfying a De/Dc ratio of 0.1 or more and 10.0 or less, the average particle diameter of the additive material can be confirmed by, for example, performing ultrasonic dispersion using an ultrasonic homogenizer or the like and measuring the particle size distribution using a particle size distribution measuring instrument.

The lithium ion-conductive oxide material of the present invention is a material that can be used as a solid electrolyte material in a variety of uses using the conductivity or compactness thereof.

For example, the lithium ion-conductive oxide material can be used in lithium batteries such as lithium secondary batteries or as a variety of gas sensor materials of SOx, NOx, carbon dioxide, oxygen and the like and lithium ion sensor materials, but is particularly preferably used as a solid electrolyte for all-solid-state lithium secondary batteries.

Furthermore, even in normal lithium ion secondary batteries in which an electrolytic solution is used, when at least a part of a liquid-form electrolyte is substituted with a ceramics material according to the present invention, it is possible to avoid or suppress the use of organic electrolytic solutions, and it becomes possible to suppress a side reaction attributed to organic electrolytic solutions at the same time as simplifying the battery structures.

Regarding a method for manufacturing the lithium ion-conductive oxide material of the present invention, the lithium ion-conductive oxide material may be produced by any manufacturing method as long as the above-described requirements of the present invention can be satisfied. Examples thereof include a gas phase synthesis method such as PVD or CVD, a solid-phase reaction method, a spray pyrolysis method, a wet method such as a co-precipitation method or a sol-gel method and the like.

As an example of the method for manufacturing the lithium ion-conductive oxide material of the present invention, a synthesis example of the solid-phase reaction method will be shown below.

As raw materials, it is possible to use sulfates, oxides, carbonates, hydroxides, nitrates, acetates, oxalates, halides and the like of configuration elements.

For mixing, it is possible to use a planetary mill, a bead mill, a ball mill or the like.

The calcination temperature of a mixture differs depending on configuration components or blending (for example, differs depending on a substituting metal ion), but is, normally, preferably 900°C or higher and 1200°C or lower.

The calcination time differs depending on the configuration components or blending (for example, differs depending on a substituting metal ion), but is, normally, preferably five hours or longer and 20 hours or shorter.

The calcination atmosphere is appropriately set to an atmosphere where the oxygen partial pressure becomes appropriate depending on the configuration components or blending. Examples thereof include atmospheres such as in an air, in nitrogen or argon and in nitrogen or argon where the oxygen partial pressure has been adjusted.

A powder obtained by the calcination may be used as it is, but may be further pulverized. In the case of pulverizing the powder, it is possible to use a planetary mill, a bead mill, a ball mill or the like. The particle sizes after the pulverization are preferably adjusted to appropriate particle sizes depending on uses; however, usually, D50 is preferably 0.3 µm or more and 35 µm or less and more preferably 0.3 µm or more and 20 µm or less. This D50 means volume-based cumulative 50% in the case of being measured by a laser diffraction and scattering method (which will be also true below).

In addition, as another example of the method for manufacturing the lithium ion-conductive oxide material of the present invention, a synthesis example of the spray pyrolysis method will be shown below.

Raw materials are not limited as long as the raw materials can be dissolved in aqueous solutions or organic solvents, and it is possible to use, for example, carbonates, hydroxides, nitrates, acetates, oxalates, halides, metal alkoxides and the like of configuration elements.

As a solvent, it is possible to use water, an alkane, an alkanecarboxylic acid and/or an alcohol.

The temperature of spray pyrolysis differs depending on configuration components, blending or the solvent concentration (for example, differs depending on a substituting metal ion), but is normally 200°C or higher and 1200°C or lower.

The particle diameters of liquid droplets during spraying are preferably 0.01 µm or more and 100 µm or less.

The atmosphere of a carrier gas is appropriately set to an atmosphere where the oxygen partial pressure becomes appropriate depending on the configuration components or blending. Examples thereof include atmospheres such as in an air, in nitrogen or argon and in nitrogen or argon where the oxygen partial pressure has been adjusted.

A powder obtained by the spray pyrolysis may be used as it is, but may be further pulverized. In the case of pulverizing the powder, it is possible to use a planetary mill, a bead mill, a ball mill or the like. The particle sizes after the pulverization are preferably adjusted to appropriate particle sizes depending on uses; however, usually, D50 is preferably 0.3 µm or more and 35 µm or less and more preferably 0.3 µm or more and 20 µm or less.

### Examples

Hereinafter, the present invention will be specifically described using examples (invention examples) and comparative examples, but the present invention is not limited thereto.

### [Production of Lithium Ion-Conductive Oxide Material]

As raw materials of a lithium ion-conductive oxide material, Li₂CO₃, MgO, V₂O₃, Mn₂O₃, CuO, NiO, La(OH)₃, SrCOs and ZrO₂ were used. These raw material powders were weighed and mixed to produce compositions shown in Tables 1 to 3. The individual raw materials were mixed as described below. The weighed raw material powders were injected into a plastic container together with zirconia balls, mixed in ethanol with a ball mill for 15 hours and then further dried to obtain raw material mixtures. The compositions shown in Tables 1 to 3 are preparation compositions and contain a larger amount of Li₂CO₃ than that in target compositions in consideration of the fact that some of Li is lost during firing. Therefore, the preparation compositions are understood to be compositions that do not satisfy the charge compensation (charge conservation) of garnet-type crystal structures but satisfy the charge compensation after firing due to the loss of Li and/or the occurrence of oxygen deficiency. In addition, elements other than Li are not substantially lost during firing and basically retained even after firing in composition ratios shown in Tables 1 to 3.

The obtained raw material mixtures were calcined on a MgO heat-resistant container at 1100°C for 10 hours in the atmosphere or a nitriding atmosphere to obtain calcined products. These calcined products were injected into a nylon pot together with zirconia balls, pulverized in ethanol with a planetary ball mill for two hours and then further dried to obtain lithium ion-conductive oxide materials (synthetic powders). As a result of measuring the particle sizes of the synthetic powder of Example 47 as a representative example, D50 was shown to be 0.7 µm.

The ion conductivity and the like of the obtained lithium ion-conductive oxide materials (synthetic powders) were measured by producing sintered bodies. An organic binder dissolved in an organic solvent was added to the lithium ion-conductive oxide materials (powders), and the lithium ion-conductive oxide materials were injected into a mold having a diameter of 15 mm and pressed so that the thicknesses reached approximately 11.5 mm to obtain compacts of the lithium ion-conductive oxide materials (synthetic powders). The compacts were covered with calcined powders having the same compositions as the compacts and fired at 1200°C for four hours in a nitriding atmosphere, thereby obtaining the sintered bodies of the lithium ion-conductive oxide materials (Examples 1 to 48 and Comparative Examples 1 to 13). As the binder, methyl cellulose, ethyl cellulose, polyvinyl alcohol, polyvinyl butyral and the like can be exemplary examples. As the organic solvent, ethanol, butanol, acetone and the like can be exemplary examples.

The upper and lower surfaces of the sintered bodies of the lithium ion-conductive oxide materials obtained in Examples 1 to 48 and Comparative Examples 1 to 13 were polished with sandpaper, and then a variety of evaluations or measurements to be described below were performed.

### [Crystal Structure Analysis]

X-ray diffraction measurement of the synthetic powders obtained in Examples 1 to 48 and Comparative Examples 1 to 13 was performed using an X-ray diffractometer (Rigaku smartlab), and X-ray diffraction patterns were obtained. As a result, X-ray diffraction patterns similar to the X-ray diffraction pattern No. 4422259 (Li₇La₃Zr₂O₁₂, space group: Ia-3d (230)) of CSD (Cambridge Structural Database) were observed. Therefore, Examples 1 to 48 and Comparative Examples 1 to 13 can be determined to have a garnet-type crystal structure or a garnet-like crystal structure. The X-ray diffraction pattern of Example 47 is shown in FIG. 1. In addition, based on the obtained X-ray diffraction patterns, Rietveld analysis was performed using a multi-purpose pattern-fitting system RIETAN-FP by Fujio Izumi, the lattice constants of the individual samples were calculated, and values shown in Tables 1 to 3 were obtained.

Furthermore, the substitution of element Li positions with an A element can be confirmed by performing X-ray diffraction measurement using synchrotron radiation and performing Rietveld analysis using RIETAN-FP based on the obtained X-ray diffraction patterns. In the Rietveld analysis, RIETAN-FP was used, but other calculation software may be used.

In addition, the valence and coordination number of the A element can be confirmed by measuring the amount of an X-ray absorbed at an energy near the absorption edge of the A element using XAFS (X-ray absorption fine structure).

A specific method for the Rietveld analysis by Fujio Izumi is shown in "Truth of Powder X-ray Analysis" written by Fujio Izumi, 2^{nd} Edition.

### [Relative Density]

The masses of the polished sintered bodies obtained in Examples 1 to 48 and Comparative Examples 1 to 13 were measured, and then the lengths or diameters and thicknesses of the individual sides of the polished sintered bodies of Examples 1 to 48 and Comparative Examples 1 to 13 were measured at several places using a vernier caliper and a micrometer to calculate the average values. The volumes of the sintered bodies of Examples 1 to 48 and Comparative Examples 1 to 13 were calculated using these measurement values, and apparent densities were calculated. In addition, relative densities were calculated by calculating the theoretical densities of the individual compositions, then, dividing the apparent densities by the theoretical densities and multiplying the results by 100, and values shown in Tables 1 to 3 were obtained.

### [Measurement of Lithium Ion Conductivity]

Both surfaces of the polished sintered bodies obtained in Examples 1 to 48 and Comparative Examples 1 to 13 were coated by Au sputtering, then, alternating current impedances were measured using an electrochemical measuring system manufactured by N4L (Newtons4th Ltd) at room temperature, and lithium ion conductivities were calculated. As a result, values shown in Tables 1 to 3 were obtained as the lithium ion conductivities of the individual samples.

### [Stability Evaluation]

After a heat treatment was performed on the sintered body samples from which the lithium ion conductivities were measured as described above in the air at 720°C for 10 hours, the ion conductivities were measured in the same manner as described above, the conductivities after the heat treatment were divided by the conductivities before the heat treatment, the results were multiplied by 100 to calculate the proportions of the conductivity decreased by the heat treatment, and the proportions were evaluated as the stability of the crystal structure. As a result, values shown in Tables 1 to 3 were obtained.

**[Table 1]**

| | Composition of lithium ion-conductive oxide material | A element | Regular octahedral preference (kJ/mol) | B element | A/La | Relative density (%) | Conductivity (S/cm) | Lattice constant (Å) | Stability (%) | Li vacancy proportion (%) | Proportion of element Li substituted |
|---|---|---|---|---|---|---|---|---|---|---|---|
| Example 1 | Li_{6.95}V_{0.03}La₃Zr_{1.99}O₁₂ | V | 54 | | 0.010 | 79 | 1.3×10⁻⁵ | 12.980 | 90 | 53.5 | 0.3% |
| Example 2 | Li_{6.8}V_{0.08}La₃Zr_{1.99}O₁₂ | V | 54 | | 0.027 | 81 | 1.4×10⁻⁵ | 12.980 | 92 | 54.2 | 1.0% |
| Example 3 | Li_{3.5}V_{1.3}La₃Zr_{1.9}O₁₂ | V | 54 | | 0.433 | 80 | 1.6×10⁻⁵ | 12.979 | 91 | 68.7 | 17.1% |
| Example 4 | Li_{6.91}Mn_{0.03}La₃Zr₂O₁₂ | Mn | 92 | | 0.010 | 82 | 1.3×10⁻⁵ | 12.980 | 97 | 53.7 | 0.4% |
| Example 5 | Li_{6.76}Mn_{0.08}La₃Zr₂O₁₂ | Mn | 92 | | 0.027 | 81 | 1.4×10⁻⁵ | 12.980 | 99 | 54.4 | 1.1% |
| Example 6 | Li_{3.1}Mn_{1.3}La₃Zr₂O₁₂ | Mn | 92 | | 0.433 | 83 | 1.6×10⁻⁵ | 12.979 | 98 | 70.7 | 18.6% |
| Example 7 | Li_{6.9}4Ni_{0.03}La₃Zr₂O₁₂ | Ni | 84 | | 0.010 | 80 | 1.4×10⁻⁵ | 12.981 | 96 | 53.5 | 0.4% |
| Example 8 | Li_{6.84}Ni_{0.08}La₃Zr₂O₁₂ | Ni | 84 | | 0.027 | 80 | 1.5×10⁻⁵ | 12.980 | 98 | 53.9 | 1.1% |
| Example 9 | Li_{4.4}Ni_{1.3}La₃Zr₂O₁₂ | Ni | 84 | | 0.433 | 81 | 1.6×10⁻⁵ | 12.980 | 98 | 62.0 | 18.6% |
| Example 10 | Li_{6.94}Cu_{0.03}La₃Zr₂O₁₂ | Cu | 63 | | 0.010 | 80 | 1.3×10⁻⁵ | 12.981 | 95 | 53.5 | 0.4% |
| Example 11 | Li_{6.84}Cu_{0.08}La₃Zr₂O₁₂ | Cu | 63 | | 0.027 | 80 | 1.5×10⁻⁵ | 12.980 | 96 | 53.9 | 1.1% |
| Example 12 | Li_{4.4}Cu_{1.3}La₃Zr₂O₁₂ | Cu | 63 | | 0.433 | 82 | 1.6×10⁻⁵ | 12.980 | 97 | 62.0 | 18.6% |
| Example 13 | Li_{6.61}Mg_{0.17}V_{0.03}La₃Zr_{1.99}O₁₂ | V | 54 | Mg | 0.010 | 88 | 4.1×10⁻⁴ | 12.980 | 91 | 54.7 | 2.7% |
| Example 14 | Li_{6.46}Mg_{0.17}V_{0.08}La₃Zr_{1.99}O₁₂ | V | 54 | Mg | 0.027 | 89 | 4.3×10⁻⁴ | 12.980 | 93 | 55.3 | 3.4% |
| Example 15 | Li_{3.16}Mg_{0.17}V_{1.3}La₃Zr_{1.9}O₁₂ | V | 54 | Mg | 0.433 | 91 | 5.1×10⁻⁴ | 12.980 | 92 | 69.8 | 19.6% |
| Example 16 | Li_{6.57}Mg_{0.17}Mn_{0.03}La₃Zr₂O₁₂ | Mn | 92 | Mg | 0.010 | 90 | 4.2×10⁻⁴ | 12.980 | 97 | 54.9 | 2.9% |
| Example 17 | Li_{6.42}Mg_{0.17}Mn_{0.08}La₃Zr₂O₁₂ | Mn | 92 | Mg | 0.027 | 91 | 4.6×10⁻⁴ | 12.980 | 98 | 55.5 | 3.6% |
| Example 18 | Li_{2.76}Mg_{0.17}Mn_{1.3}La₃Zr₂O₁₂ | Mn | 92 | Mg | 0.433 | 89 | 5.1×10⁻⁴ | 12.980 | 98 | 71.8 | 21.0% |
| Example 19 | Li_{6.60}Mg_{0.17}Ni_{0.03}La₃Zr₂O₁₂ | Ni | 84 | Mg | 0.010 | 90 | 4.3×10⁻⁴ | 12.980 | 97 | 54.7 | 2.9% |
| Example 20 | Li_{6.50}Mg_{0.17}Ni_{0.08}La₃Zr₂O₁₂ | Ni | 84 | Mg | 0.027 | 92 | 4.9×10⁻⁴ | 12.980 | 97 | 55.0 | 3.6% |

**[Table 2]**

| | Composition of lithium ion-conductive oxide material | A element | Regular octahedral preference (kJ/mol) | B element | A/La | Relative density (%) | Conductivity (S/cm) | Lattice constant (Å) | Stability (%) | Li vacancy proportion (%) | Proportion of element Li substituted |
|---|---|---|---|---|---|---|---|---|---|---|---|
| Example 21 | Li_{4.06}Mg_{0.17}Ni_{0.3}La₃Zr₂O₁₂ | Ni | 84 | Mg | 0.433 | 90 | 5.1×10⁻⁴ | 12.980 | 97 | 63.1 | 21.0% |
| Example 22 | Li_{6.60}Mg_{0.17}Cu_{0.03}La₃Zr₂O₁₂ | Cu | 63 | Mg | 0.010 | 89 | 4.2×10⁴ | 12.980 | 95 | 54.7 | 2.9% |
| Example 23 | Li_{6.50}Mg_{0.17}Cu_{0.08}La₃Zr₂O₁₂ | Cu | 63 | Mg | 0.027 | 91 | 4.7×10⁻⁴ | 12.980 | 95 | 55.0 | 3.6% |
| Example 24 | Li_{4.06}Mg_{0.17}Cu_{1.3}La₃Zr₂O₁₂ | Cu | 63 | Mg | 0.433 | 90 | 5.1×10⁻⁴ | 12.980 | 96 | 63.1 | 21.0% |
| Example 25 | Li_{6.97}V_{0.04}La_{2.95}Sr_{0.05}Zr_{1.99}O₁₂ | V | 54 | Sr | 0.014 | 80 | 1.1×10⁻⁴ | 12.982 | 92 | 53.3 | 0.4% |
| Example 26 | Li_{6.99}V_{0.1}La_{2.75}Sr_{0.25}Zr_{1.99}O₁₂ | V | 54 | Sr | 0.036 | 82 | 5.2×10⁻⁴ | 12.986 | 94 | 52.8 | 1.3% |
| Example 27 | Li_{4.05}V_{1.2}La_{2.75}Sr_{0.25}Zr_{1.9}O₁₂ | V | 54 | Sr | 0.436 | 85 | 6.0×10⁻⁴ | 12.985 | 93 | 65.7 | 15.7% |
| Example 28 | Li_{6.98}Mn_{0.04}La_{2.75}Sr_{0.1}Zr₂O₁₂ | Mn | 92 | Sr | 0.014 | 80 | 2.1×10⁻⁴ | 12.983 | 98 | 53.2 | 0.6% |
| Example 29 | Li_{6.95}Mn_{0.1}La_{2.75}Sr_{0.25}Zr₂O₁₂ | Mn | 92 | Sr | 0.036 | 80 | 5.6×10⁻⁴ | 12.986 | 98 | 53.0 | 1.4% |
| Example 30 | Li_{3.65}Mn_{1.2}La_{2.75}Sr_{0.25}Zr₂O₁₂ | Mn | 92 | Sr | 0.436 | 83 | 6.0×10⁻⁴ | 12.986 | 99 | 67.7 | 17.1% |
| Example 31 | Li_{6.97}Ni_{0.04}La_{2.95}Sr_{0.05}Zr₂O₁₂ | Ni | 84 | Sr | 0.014 | 82 | 1.2×10⁻⁴ | 12.982 | 96 | 53.3 | 0.6% |
| Example 32 | Li_{6.95}Ni_{0.15}La_{2.75}Sr_{0.25}Zr₂O₁₂ | Ni | 84 | Sr | 0.055 | 84 | 6.0×10⁻⁴ | 12.986 | 97 | 52.7 | 2.1% |
| Example 33 | Li_{4.85}Ni_{1.2}La_{2.75}Sr_{0.25}Zr₂O₁₂ | Ni | 84 | Sr | 0.436 | 85 | 6.0×10⁻⁴ | 12.986 | 98 | 59.7 | 17.1% |
| Example 34 | Li_{6.97}Cu_{0.04}La_{2.95}Sr_{0.05}Zr₂O₁₂ | Cu | 63 | Sr | 0.014 | 80 | 1.1×10⁻⁴ | 12.982 | 95 | 53.3 | 0.6% |
| Example 35 | Li_{6.95}Cu_{0.15}La_{2.75}Sr_{0.26}Zr₂O₁₂ | Cu | 63 | Sr | 0.055 | 82 | 6.0×10⁻⁴ | 12.986 | 96 | 52.7 | 2.1% |
| Example 36 | Li_{4.65}Cu_{1.2}La_{2.75}Sr_{0.25}Zr₂O₁₂ | Cu | 63 | Sr | 0.436 | 83 | 6.0×10⁻⁴ | 12.986 | 96 | 59.7 | 17.1% |
| Example 37 | Li_{6.86}Mg_{0.17}V_{0.03}La_{2.75}Sr_{0.25}Zr_{1.99}O₁₂ | V | 54 | Mg,Sr | 0.011 | 90 | 8.1×10⁻⁴ | 12.986 | 92 | 53.0 | 2.7% |
| Example 38 | Li_{6.71}Mg_{0.17}V_{0.08}La_{2.75}Sr_{0.25}Zr_{1.99}O₁₂ | V | 54 | Mg,Sr | 0.029 | 93 | 8.8×10⁻⁴ | 12.986 | 94 | 53.7 | 3.4% |
| Example 39 | Li_{3.71}Mg_{0.17}V_{1.2}La_{2.75}Sr_{0.25}Zr_{1.9}O₁₂ | V | 54 | Mg,Sr | 0.436 | 92 | 8.5×10⁻⁴ | 12.985 | 94 | 66.8 | 18.1% |
| Example 40 | Li_{6.82}Mg_{0.17}Mn_{0.03}La_{2.75}Sr_{0.25}Zr₂O₁₂ | Mn | 92 | Mg,Sr | 0.011 | 92 | 7.8×10⁻⁴ | 12.986 | 97 | 53.2 | 2.9% |

**[Table 3]**

| | Composition of lithium ion-conductive oxide material | A element | Regular octahedral preference (kJ/mol) | B element | A/La | Relative density (%) | Conductivity (S/cm) | Lattice constant (Å) | Stability (%) | Li vacancy proportion (%) | Proportion of element Li substituted |
|---|---|---|---|---|---|---|---|---|---|---|---|
| Example 41 | Li_{6.67}Mg_{0.17}Mn_{0.08}La_{2.75}Sr_{0.25}Zr₂O₁₂ | Mn | 92 | Mg,Sr | 0.029 | 92 | 8.1×10⁻⁴ | 12.986 | 99 | 53.9 | 3.6% |
| Example 42 | Li_{3.31}Mg_{0.17}Mn_{1.2}La_{2.75}Sr_{0.25}Zr₂O₁₂ | Mn | 92 | Mg,Sr | 0.436 | 93 | 8.6×10⁻⁴ | 12.986 | 98 | 68.8 | 19.6% |
| Example 43 | Li_{6.85}Mg_{0.17}Ni_{0.03}La_{2.75}Sr_{0.25}Zr₂O₁₂ | Ni | 84 | Mg,Sr | 0.011 | 92 | 1.0×10⁻³ | 12.986 | 98 | 53.0 | 2.9% |
| Example 44 | Li_{6.81}Mg_{0.17}Ni_{0.05}La_{2.75}Sr_{0.25}Zr₂O₁₂ | Ni | 84 | Mg,Sr | 0.018 | 94 | 1.2×10⁻³ | 12.986 | 98 | 53.1 | 3.1% |
| Example 45 | Li_{4.51}Mg_{0.17}Ni_{1.2}La_{2.75}Sr_{0.25}Zr₂O₁₂ | Ni | 84 | Mg,Sr | 0.436 | 93 | 1.1×10⁻³ | 12.986 | 98 | 60.8 | 19.6% |
| Example 46 | Li_{6.85}Mg_{0.17}Cu_{0.03}La_{2.75}Sr_{0.25}Zr₂O₁₂ | Cu | 63 | Mg,Sr | 0.011 | 91 | 1.0×10⁻³ | 12.986 | 96 | 53.0 | 2.9% |
| Example 47 | Li_{6.75}Mg_{0.17}Cu_{0.08}La_{0.75}Sr_{0.25}Zr₂O₁₂ | Cu | 63 | Mg,Sr | 0.029 | 94 | 1.1×10⁻³ | 12.986 | 98 | 53.3 | 3.6% |
| Example 48 | Li_{4.51}Mg_{0.17}Cu_{1.2}La_{2.75}Sr_{0.25}Zr₂O₁₂ | Cu | 63 | Mg,Sr | 0.436 | 94 | 1.1×10⁻³ | 12.986 | 98 | 60.8 | 19.6% |
| Comparative Example 1 | Li_{6.76}Al_{0.08}La₃Zr₂O₁₂ | | | | | 85 | 1.3×10⁻⁵ | 12.979 | 87 | 54.4 | 1.1% |
| Comparative Example 2 | Li_{6.76}Ga_{0.08}La₃Zr₂O₁₂ | | | | | 84 | 2.9×10⁻⁵ | 12.980 | 85 | 54.4 | 1.1% |
| Comparative Example 3 | Li_{6.84}Co_{0.08}La₃Zr₂O₁₂ | Co | 29 | | 0.027 | 80 | 1.2×10⁻⁵ | 12.980 | 85 | 53.9 | 1.1% |
| Comparative Example 4 | Li_{6.99}V_{0.01}La₃Zr_{1.995}O₁₂ | V | 54 | | 0.003 | 80 | 1.3×10⁻⁵ | 12.980 | 87 | 53.4 | 0.1% |
| Comparative Example 5 | Li_{3.2}V_{1.4}La₃Zr_{1.9}O₁₂ | V | 54 | | 0.467 | 82 | 6.1×10⁻⁶ | 12.978 | 86 | 70.0 | 18.6% |
| Comparative Example 6 | Li_{6.97}Mn_{0.01}La₃Zr₂O₁₂ | Mn | 92 | | 0.003 | 80 | 1.3×10⁻⁵ | 12.980 | 88 | 53.5 | 0.1% |
| Comparative Example 7 | Li_{2.6}Mn_{1.4}La₃Zr₂O₁₂ | Mn | 92 | | 0.467 | 85 | 7.3×10⁻⁶ | 12.979 | 87 | 72.0 | 20.0% |
| Comparative Example 8 | Li_{6.96}Ni_{0.02}La₃Zr₂O₁₂ | Ni | 84 | | 0.007 | 81 | 1.3×10⁻⁵ | 12.981 | 85 | 53.5 | 0.3% |
| Comparative Example 9 | Li_{4.2}Ni_{1.4}La₃Zr₂O₁₂ | Ni | 84 | | 0.467 | 82 | 8.2×10⁻⁶ | 12.980 | 89 | 62.7 | 20.0% |
| Comparative Example 10 | Li_{6.98}Cu_{0.01}La₃Zr₂O₁₂ | Cu | 63 | | 0.003 | 81 | 1.3×10⁻⁵ | 12.981 | 86 | 53.4 | 0.1% |
| Comparative Example 11 | Li_{4.2}Cu_{1.4}La₃Zr₂O₁₂ | Cu | 63 | | 0.467 | 84 | 9.3×10⁻⁶ | 12.980 | 89 | 62.7 | 20.0% |
| Comparative Example 12 | Li_{2.5}Al_{1.5}La₃Zr₂O₁₂ | | | | | 87 | 9.4×10⁻⁷ | 12.980 | 83 | 73.3 | 21.4% |
| Comparative Example 13 | Li₇Al_{0.2}La_{2.4}Sr_{0.6}Zr₂O₁₂ | | | | | 88 | 2.1×10⁻⁵ | 12.988 | 82 | 52.0 | 2.9% |

As shown in Tables 1 to 3, it was found from Examples 1 to 48 and Comparative Examples 1 to 13 that, in a case where the mole ratio of the A element to La was in a range of 0.01 or more and 0.45 or less and the octahedral coordination preference of the A element was 50 kJ/mol or more, the stability was 90% or more and high stability was shown.

In addition, as shown in Tables 1 to 3, in a case where Mg was added as a B element, the relative densities showed 88% or more in all cases, and, furthermore, in a case where Mg and Sr were added, the lattice constants were expanded in all cases, and higher ion conductivities were shown.

Furthermore, in a case where the octahedral coordination preference was 60 kJ/mol or more, in all cases, the stability was evaluated as 95% or more, and higher stability was shown.

In addition, the lithium ion-conductive oxide materials of Examples 1 to 48 had ion conductivities of 1 × 10⁻⁵ S/cm or more; however, in the cases of Examples 43 to 48 where Mg and Sr were added and the A element was a divalent cation, higher ion conductivities of 1 × 10⁻³ S/cm or more were shown.

Therefore, the lithium ion-conductive oxide materials of Examples 1 to 48 had high ion conductivities and had more stable characteristics, and thus, when the lithium ion-conductive oxide materials are used as solid electrolytes, it is possible to provide all-solid-state lithium ion secondary batteries having excellent battery characteristics.

## Claims

1. A lithium ion-conductive oxide material comprising: each element of Li, La, Zr and O; and at least an A element,
wherein the A element has a d electron, and is in a cation state where regular octahedral coordination preference in stabilization of an anion of oxygen by a ligand field becomes 50 kJ/mol or more, and a mole ratio A/La of the A element to La is 0.01 or more and 0.45 or less.

2. The lithium ion-conductive oxide material according to claim 1, wherein the lithium ion-conductive oxide material is composed of a complex oxide having a garnet-type or garnet-like crystal structure, and a proportion of Li site vacancies is 52.5% or more and 72.5% or less.

3. The lithium ion-conductive oxide material according to claim 1 or 2, wherein the lithium ion-conductive oxide material is composed of a complex oxide having a garnet-type or garnet-like crystal structure; in a case where a proportion of the element Li substituted is more than 0% and 4.0% or less, a proportion of Li site vacancies is 52.5% or more and 55.5% or less; and, in a case where the proportion of the element Li substituted is 15% or more and 21% or less, the proportion of the Li site vacancies is 60.0% or more and 70.0% or less.

4. The lithium ion-conductive oxide material according to any one of claims 1 to 3, further comprising a B element, wherein B is one or two selected from Mg and Sr.

5. The lithium ion-conductive oxide material according to any one of claims 1 to 4, wherein the A element is in a cation state where the regular octahedral coordination preference in stabilization of an anion of oxygen by a ligand field becomes 60 kJ/mol or more.

6. The lithium ion-conductive oxide material according to any one of claims 1 to 5, wherein the A element is contained in a divalent cation state.

7. The lithium ion-conductive oxide material according to any one of claims 1 to 6, having an ion conductivity at room temperature of 1 × 10⁻⁵ S/cm or more.

8. The lithium ion-conductive oxide material according to any one of claims 1 to 7, wherein the crystal structure has a lattice constant of 12.93 Å or more.

9. The lithium ion-conductive oxide material according to any one of claims 1 to 8, having a median size of 0.3 µm or more and 35 µm or less.

10. A lithium ion secondary battery comprising the lithium ion-conductive oxide material according to any one of claims 1 to 9.

11. The lithium ion secondary battery according to claim 10, wherein a De/Dc ratio of an average particle diameter De of the lithium ion-conductive oxide material to an average particle diameter Dc of a positive electrode material of the lithium ion secondary battery is 0.1 or more and 10.0 or less.

12. An all-solid-state lithium secondary battery, comprising the lithium ion-conductive oxide material according to any one of claims 1 to 9 as a solid electrolyte.

13. The all-solid-state lithium secondary battery according to claim 12, wherein a De/Dc ratio of an average particle diameter De of the lithium ion-conductive oxide material to an average particle diameter Dc of a positive electrode material of the all-solid-state lithium secondary battery is 0.1 or more and 10.0 or less.
